# EUROPEAN PATENT APPLICATION

(11) **EP 3 732 985 A1**
(43) Date of publication of application: **04.11.2020**
(21) Application number: 19382329.1
(22) Date of filing: 02.05.2019
(51) Int. Cl.: A23B 4/00, A23B 4/005, A23B 4/01, A23B 4/07

(54) **THAWING PLANT AND THAWING METHOD OF RAW FROZEN MEAT PRODUCTS IN A DRUM TUMBLER**

(71) Applicant: Metalquimia, S.A.U., 17007 Girona (ES)
(72) Inventor: LAGARES GAMERO, Josep, 17850 Besalú (ES)
(74) Representative: Juncosa Miró, Jaime

(57) **Abstract**

Thawing plant comprising a drum tumbler (10) hermetically sealable; a vacuum pump (11) connected to said drum tumbler (10) to create a partial vacuum defined below 125 mbars; a water steam injector (12) connected to said drum tumbler (10); a rotating device (13) connected to the drum tumbler (10) to produce its continuous or intermittent rotation; wherein it further comprises a deep diathermy heating applicator (20) including multiple directional emitter antennas (21) configured to apply radiofrequency waves in a medium frequency range configured and focused to produce an uneven heating of the meat product (30) maximizing the heating of an inner volume (33) of the meat product (30) at a predefined depth below an external surface (31) of said meat product (30).

## Description

### Technical field

The present invention is directed to a plant and thawing method of raw frozen meat-products in a drum tumbler using a combination of vacuum, water steam, thermic control and deep diathermic heating of the internal parts of the frozen meat product.

### State of the Art

Document ES0435711, filed on 1975 by the same applicant as this patent application, describe a drum tumbler including heat carrier fluid circuit for the thermal control of the walls of the drum tumbler, the heat carrier fluid being regulated by a valve controlled according to measurements of the meat product temperature contained in the drum tumbler.

Document ES8608800, filed on 1985 by the same applicant as this patent application, describes a similar drum tumbler, but said drum tumbler including an air pump to create vacuum inside the drum tumbler.

Document EP1082905, filed on 1999 by the same applicant as this patent application, describes a drum tumbler supported in a tilting chassis, said drum also including heat carrier fluid circuit for the thermal control of the walls of the drum tumbler.

Document WO2004066742A1 describes a plant including a drum tumbler wherein vacuum can be stablished, where steam is applied for thawing a meat product, and which is surrounded by a heat carrier fluid circuit for the thermal control of the walls of the drum tumbler. This document also describes a thawing method using a combination of those steps in which the heat carrier fluid circuit cools the meat product during the final steps of the thawing method.

Document JP2004357629A also describes a similar process but being in this case silent about the thermal control of the drum tumbler walls temperature.

Document EP2327310B1 describes a drum tumbler wherein vacuum is stablished, where steam is applied for thawing a meat product, and which is surrounded by a heat carrier fluid circuit for the thermal control of the walls of the drum tumbler, describing a method according to which the meat product is cooled after the thawing thereof using the heat carrier fluid circuit.

Document EP3000326B1 is similar to the previously cited document but claiming that the meat product is cooled during the thawing process.

According to the solution described on those documents, and other similar documents, the heating of the frozen meat product is produced from the outside to the inside, being the exterior part of the meat product thaw earlier than the inside part of the meat product, being necessary to transmit heat through the thaw part to the inner core to thaw said inner core without producing the overheating of the external part of the meat product.

Document EP1997349 describe a plant and a method for thaw or cook food products using exclusively electromagnetic energy in the range of the microwaves or the UHF, configured to produce a uniform heating of the meat product.

The food products are usually non uniform, containing muscle tissues, fat tissues, bones, tendons and other types of tissues mixed together, and usually have an irregular shape that may include thin parts and tips. Each type of tissue absorbs the electromagnetic energy differently, producing different heating at a different wavelength, and the thin parts and tips typically suffer overheating when heated using electromagnetic energy. Furthermore, the microwaves and the UHF frequencies have a limited penetration capacity on meat products, producing the heating mainly on the external volume of the meat product.

Therefore, the uniform heating of a meat product using electromagnetic energy is very challenging specially when accelerated and require a complex array of antennas and sensors and a continuous monitoring of the parameters of the treatment.

As a result, it is easy to produce local overheating of the meat product, cooking parts of the meat product during the thaw process when microwaves of UHF frequencies are used for thawing.

### Brief description of the invention

The present invention is referred, according to a first aspect, to a thawing plant for defrosting of raw frozen meat-products.

Said thawing plant will comprise the following features, which are already known in the state of the art:
- a drum tumbler hermetically sealable;
- a vacuum pump connected to said drum tumbler to reduce the air pressure inside the drum tumbler creating a partial vacuum;
- a water steam injector connected to said drum tumbler to inject water steam inside the drum tumbler;
- a rotating device connected to the drum tumbler to produce its continuous or intermittent rotation;

A frozen meat product introduced on said drum tumbler can be submitted to a partial vacuum and to a water steam which condensates on the surface of the frozen meat product at a predefined temperature determined by the air pressure.

Typically, the drum tumbler has a general cylindric shape with two closed ends, one of said ends including one opening with a hermetic door.

The drum tumbler rotates along a longitudinal axis concentric with the cylindrical shape and which is mainly horizontal, usually being said longitudinal axis concentric with the opening.

The rotation of the drum tumbler activated by the rotating device produces the tumbling of the frozen meat product, changing the positions of frozen meat product pieces exposing its surfaces and contacting different parts thereof with the inner surface of the drum tumbler, accelerating the heating and thawing thereof.

Said proposed plant further comprises the following features, which are not known in the state of the art available:
- the partial vacuum is defined below 125 mbars; and
- a deep diathermy heating applicator including multiple directional emitter antennas configured to apply radiofrequency waves in a medium frequency range configured and focused to produce an uneven heating of the meat product maximizing the heating of an inner volume of the meat product at a predefined depth below an external surface of said meat product.

The energy delivered by the deep diathermy heating applicator penetrates on the frozen meat product a predefined depth before producing a relevant heating of the frozen meat product, so that the outer volume of the meat product treated by said deep diathermy heating applicator remains un-heated or is less heated than the inner volume.

It will be understood that the inner volume of the frozen meat product is any region of the meat product placed at a predefined depth below the surface of said meat product. The meat volume between the inner volume and the surface of the meat product is the outer volume, which surrounds the inner volume with the predefined depth of meat.

Preferably the predefined depth of the deep diathermy heating is equal or bigger than 5 cm.

The surface and the outer volume of the frozen meat product can be easily heated by conventional methods, using radiation, convection or contact with heated surfaces, or even using radiofrequencies heaters such microwaves which can heat the outer volume of the frozen meat product.

In the traditional thawing methods, once the external surface of the meat product has been heated, the heat is transmitted through the outer volume by thermal conductivity reaching deeper areas of the meat product until the inner volume is completely thaw. To prevent the overheating and cooking of the outer volume or the surface of the meat product the heating temperature is limited, and the duration of the process is extended.

The combination of the external heating of the outer volume of the meat product using low pressure and steam and the heating of the inner volume using the diathermy heating applicator accelerates the overall thawing process and permit the reduction of the external surface heating of the frozen meat product because it is not necessary to heat the inner volume through heat transference from the external surface.

It is proposed to reduce the air pressure in the drum tumbler below 125 mbars, reducing the condensation temperature of the water steam on the surface of the frozen meat product reducing the heat transferred to said external surface of the frozen meat product.

The diathermy heating applicator instantaneously delivers energy at a certain predefined depth of the meat product, reaching the inner volume, without requiring the transmission of said heat by thermal conductivity through the outer volume of the meat product, the deep diathermy applicator leaving the outer volume unheated or at least less heated than the inner volume and thus producing an uneven heating of the meat product.

Said diathermy heating applicator uses multiple directional emitter antennas configured to deliver a medium frequency waves to produce said uneven heating of the meat product. The medium frequency waves are defined in the range between 300 kHz and 3000 kHz.

For example, according to a non-limitative embodiment, said directional emitter antennas can be directed to converge in a space intended to be occupied by the inner volume of a piece of meat product. In an alternative embodiment the directional emitter antennas are simply configured to deliver most of the heating energy on a predefined depth of the treated meat product.

The biologic tissues are dielectric materials which permittivity is different in front of different wave frequencies.

Typically, the cellular membranes of the biologic tissues have an optimal permittivity in front of wave frequencies in the range between 1 Hz and 10 kHz, which corresponds with the extremely low frequency ELF, the super low frequency SLF, the ultra low frequency ULF and the very low frequency VLF.

The muscular tissues and proteins of the biologic tissues have an optimal permittivity in front of wave frequencies in the range between 10 kHz and 100 MHz, which corresponds with the low frequency LF, medium frequency MF, high frequency HF and very high frequency VHF.

The water and amino acids contained in the biologic tissues have an optimal permittivity in front of wave frequencies in the range between 100 MHZ and 1 GHz, which corresponds with the microwave frequencies.

The common applications of the radio frequency radiation to heating and thawing food products uses microwaves in order to heat the water molecules contained in the food product, said water transferring the heat to the surrounding tissues.

The electric conductivity of the biologic tissues also increases with the frequency used, especially when frequencies over 1 GHz are used. Over 1 GHz the risk of producing an over-heating and a cooking of the meat product is elevated, which in this particular application is an undesired effect.

The inventor surprisingly realized that in order to thaw the frozen meat product is better to configure the radio wave frequencies to directly heat the proteins, in the range between 10 kHz and 100 MHZ, those heated proteins transferring the heat to the surrounding frozen water and preventing the cooking of the meat product, instead of the commonly used method of directly heating the water with microwaves.

The penetration of the radio waves in the biologic tissues depends on the frequency used.

Between 300 MHz and 1 GHz the radio frequencies penetrate only up to 7cm of the biologic tissues, thus it can only heat said 5cm of the outer volume of a frozen meat product and barely reach the inner volume, being unable to mainly heat said inner volume.

Between 100 MHz and 300 MHz the radio frequencies penetrate up to 7cm of the biologic tissue but using frequencies below 100 MHz the penetration is exponentially increased.

Thus, the inventor also realized that to achieve a heating of the inner volume of the frozen meat product it is necessary to use frequencies below 300 MHz, in the range of the medium frequency MF waves.

So, the use of a radio frequency waves in the range of the medium frequency MF permits a maximum penetration of the energy in the meat product, producing the direct heating of the muscular tissues and proteins without risk of cooking it.

According to a preferred embodiment the deep diathermy heating applicator is configured to apply radiofrequency waves in a range between 300 kHz and 1000 kHz, where the penetration is higher, or preferably between 400 kHz and 600 kHz where the heating of the proteins and muscular tissues is optimal.

The deep diathermy heating applicator is preferably configured to deliver between 20 kW and 50 kW of power, permitting the heating of the typical frozen meat product at a pace of approximately 1ºC/minute.

The directional emitter antennas are focused to delivery most of the energy at the inner volume of the frozen meat product. For example, an array of said directional emitter antennas can be oriented and focused to produce emissions converging in a region coincident with the inner volume of a frozen meat product introduced in the plant.

Configuring the radiofrequency waves to achieve mainly the heating of the inner volume instead of the heating of the entire volume of the frozen meat product reduces the heating time of the inner volume and reduces the energy to be delivered, resulting in a cheaper and faster procedure and plant.

It is proposed to include a pre-heating enclosure external to the drum tumbler in the thawing plant. Said pre-heating enclosure comprises said multiple directional emitter antennas and a conveyor configured to introduce into and to extract from said pre-heating enclosure the frozen meat product in a single row or in a single layer alignment along a transport path.

The transport path is the path along which the frozen meat product is moved, and defines the space occupied by the frozen meat product during said transport.

The frozen meat product includes multiples pieces of frozen meat product, each of an approximately regular size and shape. The conveyor transport said pieces in a single row or in a single layer alignment, avoiding the stacking of pieces of frozen meat product, facilitating the penetration of the radio frequency waves to the inner volume of each piece of meat product.

The pre-heating enclosure can be a dead end enclosure, the conveyor introducing and extracting the frozen meat product through the same opening of the re-heating enclosure, a batch of the frozen meat product being retained into the pre-heating enclosure during a predefined time.

Alternatively, the pre-heating enclosure can be a continuous treatment pre-heating enclosure where the conveyor transports continuously the froze meat product through it from an entrance to an exit.

Said pre-heating enclosure will be configured to transport the frozen meat product therethrough by the conveyor maintaining the inner volume of the frozen meat product in the predefined zone where the directional emitter antennas are focused, producing the pre-heating of the inner volume thereof previous to the insertion of the meat products in the drum tumbler.

Preferably the pre-heating enclosure is configured as a Faraday cage closeable by one or more gates, being the pre-heating enclosure configured to contain the radiofrequency waves produced by the multiple directional emitter antenna contained therein when said one or more gates are closed. This prevents the dissipation of the radio frequency waves emitted, which can interfere with workers or with equipment.

The multiple directional emitter antennas included in the pre-heating enclosure are arranged in different angular positions around the transport path defined by the conveyor and in successive axial positions along the transport path defined by the conveyor, being all the multiple directional emitter antennas focused to the conveyor transport path, i.e. focused in the predefined zone where inner volume of the frozen meat product transported by the conveyor is aimed to be.

The successive axial positions are different positions along the longitude of the conveyor, and the different angular positions are positions surrounding a precise position in the transport path, the conveyor passing through said directional emitter antennas array. According to an additional embodiment, the multiple directional emitter antennas of the deep diathermy heating applicator are contained within the drum tumbler arranged in different angular positions and in successive axial positions on the inner surface of the drum tumbler and/or on mixing blades attached to the inner surface of the drum tumbler. Thus, said directional emitter antennas are supported on the drum tumbler and rotates together with the drum tumbler.

Said directional emitter antennas will be directed inwards the drum tumbler so that will affect the frozen meat product contained in the drum tumbler.

The radio frequency waves will affect mainly the piece of frozen meat product directly in contact with the inner surface of the drum tumbler and/or on mixing blades attached to the inner surface of the drum on top of the directional emitter antenna.

The rotation of the drum tumbler will change the position of the frozen meat product, permitting all the pieces of frozen meat product to be affected by the radio frequency waves in a uniform manner.

Alternatively, it is proposed that the multiple directional emitter antennas of the deep diathermy heating applicator are multiple directional emitter antennas contained within the drum tumbler supported in a stationary position in the upper half of the drum tumbler and focused to emit the medium range waves downwards.

According to this embodiment the directional emitter antennas remains stationary while the drum tumbler rotates, for example supported on an arm fixed to the rotation shaft of the drum tumbler, permitting the introduction of wires from the outside of the drum tumbler through said arm.

The directional emitter antennas will be focused in a downwards direction, the radio frequency waves affecting the upper layer of pieces of frozen meat product stacked on the lower half of the drum tumbler. The rotation of the drum tumbler assures that all the pieces of frozen meat product are affected by the radio frequency waves.

According to an additional proposed feature, the drum tumbler further comprises:
- a heat carrier fluid circuit filled with a heat thermal fluid and in thermal contact with the drum tumbler, said circuit being connected to a heat carrier fluid pump and to a thermal unit adapted to modify the temperature of the heat carrier fluid; and/or
- a tilting chassis articulated around a horizontal shaft, said tilting chassis supporting the drum tumbler.

The cited thermal unit can modify the temperature of the heat carrier fluid, producing its heating and/or cooling. Said thermal unit will be a heat pump, a heater, a cooler and/or a combination of heater and a cooler.

Said heat carrier fluid is pumped through a heat carrier fluid circuit transferring thermal energy to the drum tumbler which will also be transferred to the surface of the frozen meat product contained within said drum tumbler by thermal conductivity, producing its heating and/or cooling depending on the temperature of the heat carrier fluid.

The tilting chassis permits the rotation of the drum tumbler around a horizontal shaft which is parallel to a transversal axis perpendicular to the longitudinal axis around which the drum tumbler rotates, permitting the lifting or lowering of the rear part of the drum tumbler in regard to the front part of the drum tumbler where the charging opening is defined.

The tilting of the drum tumbler activated by a tilting actuator, in combination with the direction of the rotation of the drum tumbler activated by the rotating device, determines a different distribution of the frozen meat product inside the drum tumbler and also facilitates the charging and discharging operations of the drum tumbler through said opening.

According to a second aspect of the present invention, it is directed to a thawing method of raw frozen meat-products in a drum tumbler.

The proposed method comprises the following steps, which are already known in the state of the art:
- hermetically sealing the frozen meat product within the drum tumbler and reducing the air pressure inside the drum tumbler creating a partial vacuum;
- injecting water steam in the drum tumbler while the drum tumbler is under said partial vacuum and while the drum tumbler rotates continuously or intermittently;

The pieces of frozen meat products tend to aggregate forming compact blocks which are harder to thaw than the separate pieces. The rotation of the drum tumbler disaggregates the blocks of pieces of frozen meat product into separate pieces of frozen meat product, reducing the volume and increasing the surface of each frozen meat product piece to accelerate the thaw process. The rotation of the drum tumbler during the thaw process also tenderizes the meat product when partially thaw and produces absorption of the condensed steam by the meat product further accelerating the thaw process and also increasing the weight of the pieces of meat product.

The injection of water steam in the drum tumbler while it is under partial vacuum produces the condensation of the water steam on the surface of the frozen meat product heating the external surface of said frozen meat product, producing its thawing.

The raw frozen meat product is at a temperature under 0ºC. When the water steam contacts the surface of the frozen meat product the water steam temperature drops and condensates, thus the temperature of the water steam descends bellow the evaporation temperature and covers the frozen meat product with liquid water at a temperature slightly below the evaporation temperature.

The evaporation temperature of the water is 100ºC under sea level atmospheric pressure. If the pressure into the drum tumbler were the atmospheric pressure, the frozen meat product will be covered with liquid water at 100ºC which will occasionally produce the overheating and the cooking of the external surface of the meat product.

Reducing the air pressure into the drum tumbler also reduces the evaporation temperature of the water to a level in which the overheating and cooking of the meat product can be prevented.

The method further comprises the following steps, which are considered to be not known by available the state of the art:
- creating the partial vacuum below 125 mbars; and
- previous and/or during the thawing of the frozen meat product in the drum tumbler unevenly heating the meat product with a deep diathermy heating process applying radiofrequency waves in a medium frequency range with multiple directional emitter antennas configured and focused to mainly heating an inner volume of the frozen meat product at a predefined depth below an external surface of said meat product.

The present patent application proposed to reduce such air pressure to a level below 125mbars to reduce the condensation temperature of the water below 50ºC, such that the liquid water condensed on the surface of the frozen meat product is always below 50ºC. This temperature prevents the cooking of the meat product, and it will further descend in contact with the frozen meat product to a lower positive temperature.

The diathermy heating process is a heating process which produces an uneven heating of the frozen meat product, focusing the heating on the inner volume of the frozen meat product while keeping the outer volume and the surface of the frozen meat product not heated or less heated than the inner volume.

According to a preferred embodiment of the diathermy heating process, the multiple directional emitter antennas apply radiofrequency waves in a range between 300 kHz and 1000 kHz or preferably between 400 kHz and 600 kHz and/or deliver between 20 kW and 50 kW of power.

According to an embodiment of the present patent application, the deep diathermy heating process is applied to the frozen meat product before the frozen meat product is introduced in the drum tumbler.

This solution permits the application of the deep diathermy heating process to a batch of frozen meat product while a previous batch is being treated inside the drum tumbler. The pre-heating of the inner parts of the meat product produced by the deep diathermy heating process reduced the thawing time required into the drum tumbler, and also permits the simultaneous treatment of two batches at the same time, one with the deep diathermy heating process and another batch with the drum tumbler.

Alternatively, the deep diathermy heating process can be applied to the frozen meat product while the frozen meat product remains in the drum tumbler and while the drum tumbler rotates continuously or intermittently.

In this case, each directional emitter antenna can be supported on the drum tumbler, rotating with the drum tumbler. In this case it is proposed that each directional emitter antenna emits medium frequency waves only while said emitter antenna remains in the lower half of the drum tumbler, when the frozen meat product is supported in contact with said directional emitter antenna.

Alternatively, the directional emitter antenna can remain in a stationary position in the upper half of the drum tumbler while the drum tumbler rotates continuously or intermittently, for example supported by an arm connected to a rotation shaft of the drum tumbler and emits medium range waves focused in a downwards direction.

The deep diathermy heating process being performed into the drum tumbler permits its applications while the water steam is injected in the drum tumbler, accelerating the thawing process and reducing the time during which the frozen meat product remains in the drum tumbler, making the process more efficient.

During the application of the deep diathermy heating process, the adjustment parameters of said deep diathermy heating process can be modified, for example modifying the frequency, the intensity or other parameters of the applied energy modifying the heating of the meat product produced by said deep diathermy heating process.

The meat product frequently is not a uniform meat product, for example including fat tissues, muscle tissues, bones, etc mixed together. Each one of those different tissues responds producing a different heating when submitted to a diathermy heating process configured according to specific adjustment parameters.

Modifying the adjustment parameters of the deep diathermy heating process produces a variation of the heated produced on the meat product, for example modifying which tissues are more affected by the deep diathermy heating process, modifying the predefined depth or modifying the velocity of the heating process. All those variations permit achieving a more evenly distributed heating of the inner volume of the meat product produced during the deep diathermy heating process.

Even if the diathermy heating process does not heat the inner volume evenly, for example heating the different tissues at a different temperature or heating different depths at different temperatures, the heat introduced in the inner volume will be disseminated by thermal conductivity until all the tissues of the inner volume are uniformly heated, producing an increase of the temperature of the inner volume and reducing the thawing time. The energy delivered to the inner volume will also be transmitted by thermal conductivity to the outer volume, of the meat product.

The diathermy heating process can be configured to delivery simultaneously or successively medium frequency energy with different characteristics adapted to produce the heating of different types of tissues of the meat product without producing its overheating and/or to produce a heating at different predefined depths.

According to an additional embodiment of the proposed method, it further includes:
- calculate the energy to be delivered to the inner volume of the frozen meat product during the deep diathermy heating process to reach a predefined increase in the temperature of said inner volume considering the initial temperature of the frozen meat product and the weight and/or size of the frozen meat product, and
- delivery the calculated energy on the frozen meat product by the deep diathermy heating process.

According to this feature the energy to be delivered during the deep diathermy heating process to produce a predefined increase in the temperature of the frozen meat product can be calculated considering the initial temperature of the frozen meat product and the weight and/or approximated volume of the pieces of frozen meat product to be heated.

For example, the energy necessary to produce a 20ºC increase of the temperature of the inner volume of a 20kg piece of frozen meat can be roughly calculated, and then the deep diathermy heating process can be adjusted to deliver the calculated amount of energy on said piece of frozen meat product.

For example, it is contemplated that a programmable control unit is connected to the directional emitter antennas and configured to control the operational parameters of said directional emitter antennas.

Said programmable control unit can be feed, for example by an operator, with temperature, weight and/or volume information of the average pieces of frozen meat product to be treated or of each batch of pieces of frozen meat product to be treated, being the programmable control unit configured to adapt the operational parameters of the directional emitter antennas, mainly the radio frequency used and the power delivered and/or the treatment time.

Alternatively, the temperature, weight and/or volume of each single piece of frozen meat product, can be measured using sensors, for example thermo-cameras, weight sensors or optical sensors connected to the programmable control unit which is configured to automatically adjust the operation parameters of the deep diathermy heating applicator directed to apply the deep diathermy heating process on said specific piece of frozen meat product.

It is also proposed the use of a heat carrier fluid with a controlled temperature in thermal contact with the drum tumbler, for example pumping said heat carrier fluid through a circuit integrated in the walls of the drum tumbler.

This heat carrier fluid can be used to modify the temperature of the drum tumbler and also of its content.

It is also proposed to control the temperature of the heat carrier fluid to produce a heating and a cooling of the drum tumbler during different moments of the thawing method performed in the drum tumbler.

The heating of the drum tumbler using the heat carrier fluid accelerates the defrosting of the surface and the outer volume of the frozen meat product contained in said drum tumbler and actuates in combination with the vacuum and the steam.

The cooling of the drum tumbler using the heat carrier fluid is particularly relevant to prevent the overheating of the surface and the outer volume of the frozen meat product while the inner volume is still at least partially frozen.

Said cooling can be performed during the final part of the thawing method performed in said drum tumbler, when the heat accumulated in the outer volume of the meat product is transferred by thermal conductivity to the inner volume to thaw said inner volume. During this period no more steam will be introduced in the drum tumbler and the heat carrier fluid will be cooled to cool the drum tumbler temperature also reducing the surface temperature of the meat product, preventing the overheating, the cooking and the growing of non-desired spoiling bacteria or fungus.

It will also be understood that any range of values given may not be optimal in extreme values and may require adaptations of the invention to these extreme values are applicable, such adaptations being within reach of a skilled person.

Other features of the invention appear from the following detailed description of an embodiment.

### Brief description of the Figures

The foregoing and other advantages and features will be more fully understood from the following detailed description of an embodiment with reference to the accompanying drawings, to be taken in an illustrative and non-limitative manner, in which:
Fig. 1 shows a schematic view of the proposed thawing plant, according to a first embodiment including a pre-heating enclosure and a drum tumbler;
Fig. 2 shows a schematic cross section of the pre-heating enclosure transversal to the transport path according to said first embodiment;
Fig. 3 shows a schematic cross section of the pre-heating enclosure traversal to the transport path according to a second embodiment;
Fig. 4 shows a schematic cross section of the drum tumbler traversal to its rotation axis, according to a third embodiment;
Fig. 5 shows a schematic cross section of the drum tumbler traversal to its rotation axis, according to a fourth embodiment;
Fig. 6 shows a schematic cross section of the drum tumbler traversal to its rotation axis, according to a fifth embodiment;
Fig. 7 shows a schematic longitudinal section of the drum tumbler along its rotation axis, according to a sixth embodiment;
Fig. 8 shows a schematic lateral view of the drum tumbler having a heat carrier fluid circuit attached to outer surface of the drum tumbler, surrounding it, said heat carrier fluid circuit being connected, through a rotative connection, to a heat carrier fluid pump and to a thermal unit.

In the above schematic figures, the radio frequency emitted by the antennas of the directional emitter has been schematically drawn as parallel arc segments, indicating the direction and approximate range of those emissions, making it clear where the emissions of several directional transmitting antennas overlap.

### Detailed description of an embodiment

The foregoing and other advantages and features will be more fully understood from the following detailed description of an embodiment with reference to the accompanying drawings, to be taken in an illustrative and not limitative.

The present invention is directed to a thawing plant for raw frozen meat products 30.

Thawing raw frozen meat products 30 is tricky because the thawing requires heat, but any part of the raw meat products 30 has to be over-heated or it will be cooked, and its color will change. An additional complication is that the pieces of meat product 30 are frequently quite big making difficult to thaw its inner volume.

The pieces of raw frozen meat product 30, which usually are pieces of whole muscle such ribs, hindquarters or other animal parts. Each piece of frozen meat product 30 have an external surface 31, an external volume 32 immediately bellow the external surface 31 and having a predefined thickness and an inner volume 33 surrounded by said external volume 32 and therefore being under a predefined depth below the external surface 31 of each piece of the frozen meat product 30.

In this example the typical piece of meat product has an average general thickness of approximately between 15 and 25 cm. In this case, the external volume 32 is defined as the volume of meat that forms the 5cm closest to the external surface 31 of the piece of the meat product 30, and the volume of meat surrounded by the external volume 32 and placed deeper than 5cm is defined as the inner volume 33. This inner volume 33 is the most difficult and the last part of the meat product to be thawed by the methods commonly used.

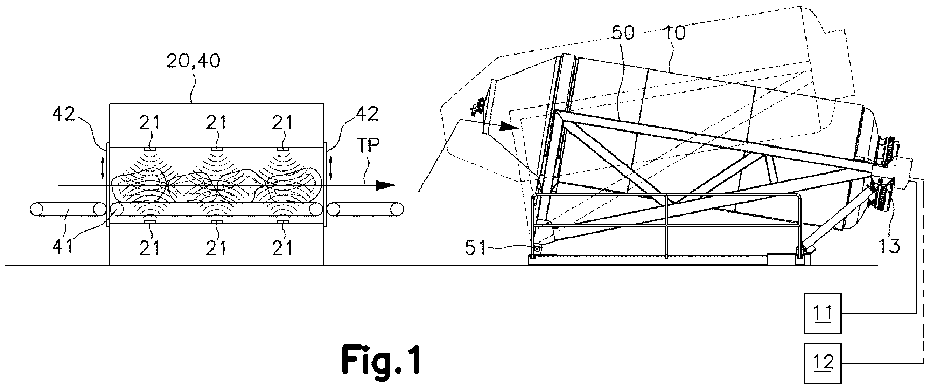

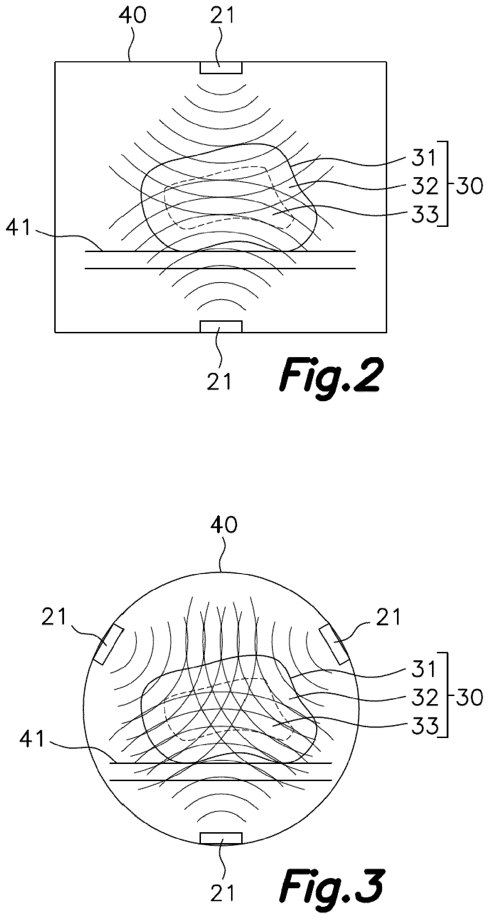

According to a first embodiment of the present shown on Figs. 1 and 2, the proposed thawing plant includes a deep diathermy heating applicator 20, including multiple directional emitter antennas 21 integrated in a pre-heating enclosure 40, and a cylindrical drum tumbler 10 connected to a vacuum pump 11 and to a water steam injector 12.

The drum tumbler 10 includes a cylindrical section mostly horizontal, the bottom end closed and a front end including a tapered conical section including an opening with a sealable door through which the meat product 30 can be introduced to and extracted from the inside of the drum tumbler 10.

Said drum tumbler 10 is supported on bearings permitting its rotation along a longitudinal axis concentric with said cylindrical section, and a rotating device 13 which includes a motor cinematically connected with the drum tumbler to produce its rotation along the longitudinal axis, for example through gears or a belt.

The inner surface of the drum tumbler 10 includes mixing blades 14 protruding inwards in a radial direction to produce the tumbling of the meat product 30 stored in the drum tumbler 10 while the drum tumbler 10 rotates.

In the exemplary embodiment shown on the drawings six mixing blades 14 are drawn in a symmetrical radial arrangement. A different number of mixing blades 14, with a different shape or arrangement are also contemplated.

It is also proposed to support the drum tumbler 10 in a tilting chassis 50 articulated around a horizontal shaft 51 which is perpendicular to an axis parallel to the longitudinal axis adjacent to the front end of the drum tumbler 10. Pistons connected to the bottom end of the tilting chassis 50 allow changing the inclination of the longitudinal axis of the drum tumbler 10, tilting said drum tumbler 10 frontwards or backwards to facilitate the insertion, extraction or mixing of the meat product contained therein. This embodiment is shown on Fig. 1 where the tilting movement of the drum tumbler 10 is shown in dashed lines.

In the example shown on Fig. 1 the pre-heating enclosure 40 is a tunnel with an entrance opening and an exit opening, both including a gate 42 for its closure. A conveyor 41, in this example a conveyor belt, passes through the pre-heating enclosure 40 for the transport of the pieces of frozen meat product along a transport path TP going through the pre-heating enclosure 40.

An alternative embodiment is also contemplated according to which the pre-heating enclosure 40 has only one opening and the conveyor 41 introduces the meat products 30 therein and extracts therefrom through said singe opening.

The directional emitter antennas 21 are placed inside the pre-heating enclosure 40, surrounding the transport path TP and directed to a target area of that transport path intended to contain the inner volume 33 of the frozen meat products 30 transported on said conveyor 41.

To allow a precise and deep penetration of the radio frequency waves generated by the directional emitter antennas 21, it is proposed that the conveyor 41 transports the pieces of frozen meat product 30 in a single row alignment, allowing the directional emitter antennas 21 to be arranged in an array surrounding the pieces of meat product 30 transported in the conveyor 41, emitting the radio frequency waves on the meat product from different angular positions around the transport path TP.

All those radio frequency waves converge in the target area where the inner volume 33 of the meat product 30 is placed during its transport along the transport path TP, mainly heating said inner volume 33.

In the example shown on Fig. 2, the pre-heating enclosure 40 includes directional emitter antennas 21 placed under the conveyor 41 belt and configured to emit upwards through the conveyor 41, which has to be made of a material transparent to said radio frequencies, and directional emitter antennas 21 placed above the conveyor 41 belt and above the transport path TP and configured to emit downwards.

In the example shown on Fig. 3, three directional emitter antennas 21 are arranged around the transport path TP at three different angular positions spaced apart 120º to each other, the waves emitted by said three directional emitter antennas 21 converging in the inner volume 33.

The penetration of the radio frequencies on the meat product depends on the frequency used, being difficult to reach and heat the inner volume 33 using frequencies above the 300 MHz. It is proposed to configure the directional emitter antennas 21 to emit in a medium frequency, between the 300 kHz and the 3000 kHz, to ensure a deep penetration reaching said inner volume 33.

Those frequencies are also selected because they produce an interaction of the proteins and with the muscle tissues producing its heating.

In the examples shown on Fig. 2 and 3 the directional emitter antennas 21 are configured and focused to emit waves of radio frequency which converge in the inner volume 33 of the meat products 30 transported through the pre-heating enclosure 40 producing its heating.

According to another embodiment of the present invention, the conveyor 41 is configured to transport the pieces of meat product 30 in a single layer alignment along the transport path TP. The features previously described can also be applied to this particular embodiment.

In the example shown on Fig. 1 the pre-heating enclosure 40 can be closed by gates 42, said pre-heating enclosure 40 actuating as a Faraday cage which content the radio frequency waves emitted by the directional emitter antennas 21. In this case, the directional emitter antennas 21 can only actuate when the gates 41 are closed producing the pre-heating on a batch of pieces of meat product contained in the pre-heating enclosure 40.

Despite the above an embodiment where the pre-heating enclosure 40 has no gates 42 and in which the conveyor can continuously transport pieces of meat product 30 there through producing a continuous treatment is also contemplated.

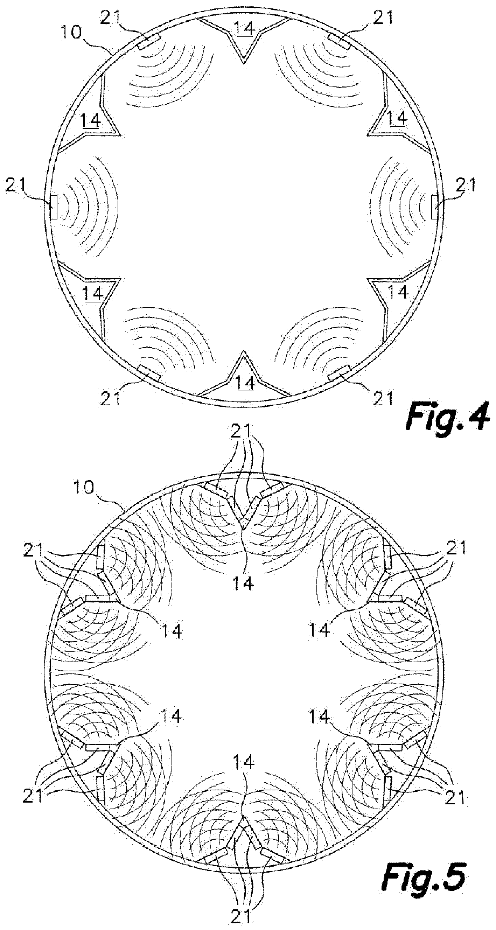

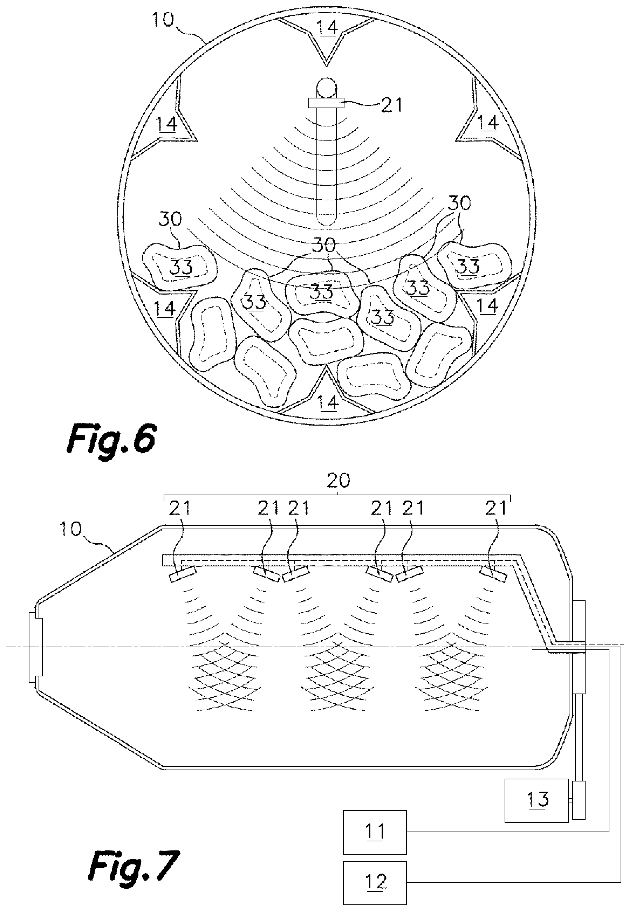

According to an alternative embodiment, shown on Figs. 4, 5, 6 and 7, the directional emitter antennas 21 are located inside the drum tumbler 10, emitting against the meat product 30 contained therein.

In this embodiment the thawing plant lacks pre-heating enclosure 40, because the deep diathermia applicator 20 is contained in the drum tumbler 10.

Inside the drum tumbler 10 the deep diathermy heating process can be applied previous to the creation of the partial vacuum, while the partial vacuum is created, or previous to the injection of the water steam. But in any case, the deep diathermy heating process shall be applied while the drum tumbler 10 rotates continuously or intermittently to assure the uniform treatment of all the pieces of frozen meat product 30 stacked inside the drum tumbler 10.

According to the embodiment shown on Fig. 4, an array of multiple directional emitter antennas 21 are located on the inner surface of the hollow cylindrical drum tumbler 10, in different radial positions between the mixing blades 14 and also in different longitudinal positions along the rotation axis of the drum tumbler 10 and directed inwards. Those directional emitter antennas 21 are attached to the drum tumbler 10 and therefore they rotate together with the drum tumbler 10.

The pieces of meat product are stacked inside the drum tumbler 10 on top of the directional emitter antennas 21 placed in the lower half of the drum tumbler 10.

Those directional emitter antennas 21 located in the lower half of the drum tumbler 10 emits upwards, affecting the inner volume 33 of the pieces of meat product 30 located immediately on top of said directional emitter antennas 21.

It is proposed to configure the directional emitter antennas 21 of the drum tumbler 10 to emit only when are in the lower half of the drum tumbler 10, i.e. only when the meat product 30 is in direct contact with it, the directional emitter antennas 21 being disconnected when remain in the upper half of the drum tumbler 10.

According to an additional or complementary embodiment, the directional emitter antennas are located in the mixing blades 14 and directed towards the interior of the drum tumbler 10, for example being directed to affect the pieces of meat product 30 being located between the mixing blades 14. It is also proposed to to locate said directional emitter antennas inside the mixing blades 14, said mixing blades 14 being made of a material transparent to the radio frequencies.

It is also proposed to locate the directional emitter antennas inside the drum tumbler 10, but supported in a stationary arm which remains in a stationary position within the drum tumbler 10 while the drum tumbler 10 rotates, the directional emitter antennas being directed downwards to emit the radio frequency waves against the upper layer of pieces of meat product 30 stacked inside the drum tumbler 30, heating its inner volume.

So, the inner volume 33 of the peat product 30 will be heated up using medium frequency waves emitted by the multiple directional emitter antennas 21, preferably using frequencies comprised between 400 kHz and 600 kHz.

This heating of the inner volume 33 can be performed previous to the introduction of the meat product 30 in the drum tumbler 10, and therefore previous to the thawing method using partial vacuum and water steam, performing the deep diathermia heating process in a pre-heating enclosure 40.

In this case the pieces of frozen meat product 30 are transported through the pre-heating enclosure 40 by the conveyor 41. Once the deep diathermia heating process is completed the inner volume 33 of each piece of meat product 30 will be hotter than the outer volume 32. Then the prices of meat product are introduced in the drum tumbler 10, the drum tumbler 10 is sealed and the air is extracted therefore using the vacuum pump 11 establishing a partial vacuum under 125 mbars inside the drum tumbler 10.

Then the water steam injector 12 introduces water steam inside the drum tumbler 10 while the drum tumbler rotates continuously or intermittently and while the air pressure remains under 125 mbars, producing the condensation of the water steam in the external surface 31 of the pieces of meat product 30 at a temperature below 50ºC, producing its heating and thawing and preventing the cooking of said external surface 31 of the pieces of meat product 30. This process is maintained until all the pieces of meat product 30 are completely thawed.

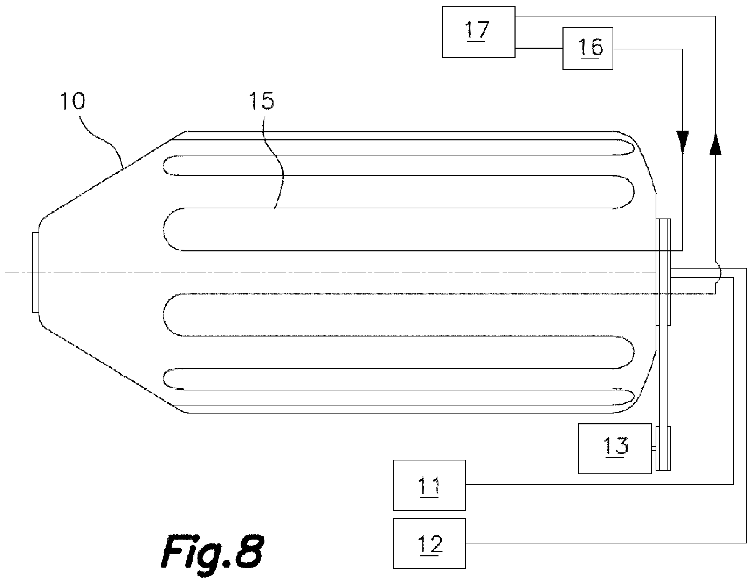

The drum tumbler 10 can be provided with a heat carrier fluid circuit 15 filled with a heat thermal fluid and in thermal contact with the drum tumbler 10, said heat carrier fluid circuit 15 being connected to a heat carrier fluid pump 16 and to a thermal unit 17 adapted to modify the temperature of the heat carrier fluid, as shown on Fig. 8.

During the thawing process performed in the drum tumbler 10, the temperature of the drum tumbler 10 can be adjusted modifying the temperature of the heat carrier fluid, permitting the heating and cooling of the drum tumbler 10. The heating of the drum tumbler 10 accelerates the heating of the external surfaces 31 of the pieces of meat product 30 contained in the drum tumbler 10, and the cooling thereof during the final part of the thawing process prevents the over-heating of the external surface 31 of the pieces of meat product 30 while the heat introduced in the pieces of meat product reaches the inner volume 33.

According to an alternative of the proposed method the deep diathermy heating process is performed inside the drum tumbler 10, previous o during the thawing process performed by the water steam. In this case the pre-heating enclosure 30 is not necessary.

It will be understood that various parts of one embodiment of the invention can be freely combined with parts described in other embodiments, even being said combination not explicitly described, provided there is no harm in such combination.

## Claims

1. Thawing plant for raw frozen meat products, comprising:
• a drum tumbler (10) hermetically sealable;
• a vacuum pump (11) connected to said drum tumbler (10) to reduce the air pressure inside the drum tumbler (10) creating a partial vacuum;
• a water steam injector (12) connected to said drum tumbler (10) to inject water steam inside the drum tumbler (10);
• a rotating device (13) connected to the drum tumbler (10) to produce its continuous or intermittent rotation;
**characterized in that** the partial vacuum is defined below 125 mbars, the thawing plant further comprising:
• a deep diathermy heating applicator (20) including multiple directional emitter antennas (21) configured to apply radiofrequency waves in a medium frequency range configured and focused to produce an uneven heating of the meat product (30) maximizing the heating of an inner volume (33) of the meat product (30) at a predefined depth below an external surface (31) of said meat product (30).

2. Thawing plant according to claim 1 wherein the deep diathermy heating applicator (20) is configured to apply radiofrequency waves in a range between 300 kHz and 1000 kHz or preferably between 400 kHz and 600 kHz and/or are configured to deliver between 20 kW and 50 kW of power.

3. Thawing plant according to claim 1 or 2 wherein the plant further includes a pre-heating enclosure (40) external to the drum tumbler (10), said pre-heating enclosure (40) comprising said multiple directional emitter antennas (21) and a conveyor (41) configured to introduce into and to extract from said pre-heating enclosure (40) the frozen meat product (30) in a single row or in a single layer alignment along a transport path (TP).

4. Thawing plant according to claim 3 wherein the pre-heating enclosure (40) is a Faraday cage closeable by one or more gates (42) configured to contain the radiofrequency waves produced by the multiple directional emitter antennas (21) contained therein when said one or more gates (42) are closed.

5. Thawing plant according to claim 3 or 4 wherein the multiple directional emitter antennas (21) included in the pre-heating enclosure (40) are arranged in different angular positions around the transport path (TP) defined by the conveyor (41) and in successive axial positions along the transport path (TP) defined by the conveyor (41), being all the multiple directional emitter antennas (21) focused to said transport path (TP).

6. Thawing plant according to claim 1 or 2 wherein the multiple directional emitter antennas (21) of the deep diathermy heating applicator (20) are contained within the drum tumbler (10) arranged in different angular positions and in successive axial positions on the inner surface of the drum tumbler (10) and/or on mixing blades (14) attached to the inner surface of the drum tumbler (10).

7. Thawing plant according to claim 1 or 2 wherein the multiple directional emitter antennas (21) of the deep diathermy heating applicator (20) are contained within the drum tumbler (10) supported in a stationary position in the upper half of the drum tumbler (10) and focused to emit the medium range waves downwards.

8. Thawing plant according to any preceding claim wherein the drum tumbler further comprises:
• a heat carrier fluid circuit (15) filled with a heat thermal fluid and in thermal contact with the drum tumbler (10), said heat carrier fluid circuit (15) being connected to a heat carrier fluid pump (16) and to a thermal unit (17) adapted to modify the temperature of the heat carrier fluid; and/or
• a tilting chassis (50) articulated around a horizontal shaft (51), said tilting chassis (50) supporting the drum tumbler (10).

9. Raw frozen meat-products thawing method in a thawing plant according to any preceding claim, the method comprising thawing the frozen meat product by:
• hermetically sealing the frozen meat product (30) within the drum tumbler (10) and reducing the air pressure inside the drum tumbler (10) creating a partial vacuum;
• injecting water steam in the drum tumbler (10) while the drum tumbler (10) is under said partial vacuum and while the drum tumbler (10) rotates continuously or intermittently;
**characterized in that** the method further comprises:
• creating the partial vacuum below 125 mbars; and
• previous and/or during the thawing of the frozen meat product (30) in the drum tumbler (10) unevenly heating the meat product (30) with a deep diathermy heating process applying radiofrequency waves in a medium frequency range with multiple directional emitter antennas (21) configured and focused to mainly heating an inner volume (33) of the frozen meat product (30) at a predefined depth below an external surface (31) of said meat product (30).

10. Raw frozen meat-products thawing method according to claim 9 wherein the multiple directional emitter antennas (21) apply radiofrequency waves in a range between 300 kHz and 1000 kHz or preferably between 400 kHz and 600 kHz and/or deliver between 20 kW and 50 kW of power.

11. Raw frozen meat-product thawing method according to claim 9 or 10 wherein the deep diathermy heating process is applied to the frozen meat product (30) before the frozen meat product (30) is introduced in the drum tumbler (10).

12. Raw frozen meat-products thawing method according to any preceding claim 8 to 10 wherein the deep diathermy heating process is applied to the frozen meat product (30) while the frozen meat product (30) remains in the drum tumbler (10) and while the drum tumbler (10) rotates continuously or intermittently.

13. Raw frozen meat-products thawing method according to claim 12 wherein
each directional emitter antenna (21) rotates with the drum tumbler (10) and emits medium frequency waves only while said emitter directional antenna (21) remains in the lower half of the drum tumbler (10); and/or
the directional emitter antennas (21) remain in the upper half of the drum tumbler (10) in a stationary position while the drum tumbler (10) rotates continuously or intermittently and emits medium range waves focused in a downwards direction.

14. Raw frozen meat-products thawing method according to any preceding claim 9 to 13 wherein the method further includes:
• calculate the energy to be delivered to the inner volume (33) of the frozen meat product (30) during the deep diathermy heating process to reach a predefined increase in the temperature of said inner volume (33) considering the initial temperature of the frozen meat product (30) and the weight and/or size of the frozen meat product (30), and
• delivery the calculated energy on the frozen meat product (30) by the deep diathermy heating process.

15. Raw frozen meat-products thawing method according to any preceding claim 9 to 14 wherein the diathermy heating process is configured to delivery simultaneously or successively radiofrequency waves with different characteristics adapted to produce the heating of different types of tissues of the meat product (30) without producing its overheating and/or to produce a heating at different predefined depths.

16. Raw frozen meat-products thawing method according to any preceding claim 9 to 15 wherein the method further comprises pumping a heat carrier fluid with controlled temperature, or with controlled temperature cooler than the meat product, through a heat carrier fluid circuit (15) in thermal contact with the drum tumbler (10) while the drum tumbler (10) is continuously or intermittently rotated during the thawing process.
